# EUROPÄISCHE PATENTSCHRIFT

(11) **EP 0 734 304 B1**
(45) Veröffentlichungstag und Bekanntmachung des Hinweises auf die Patenterteilung: **18.06.1997**
(21) Anmeldenummer: 95903337.4
(22) Anmeldetag: 13.12.1994
(51) Int. Cl.: B23K 26/10

(54) **VORRICHTUNG ZUM SCHWEISSEN UND/ODER SCHNEIDEN**
DEVICE FOR WELDING AND/OR CUTTING
DISPOSITIF DE SOUDAGE ET/OU DE DECOUPAGE

(30) Priorität: 14.12.1993 DE 9319146 U
(43) Veröffentlichungstag der Anmeldung: 02.10.1996
(73) Patentinhaber: KUKA Schweissanlagen & Roboter GmbH, D-86165 Augsburg (DE)
(72) Erfinder: STEINHART, Wilhelm, D-86316 Friedberg (DE)
(74) Vertreter: Ernicke, Hans-Dieter, Dipl.-Ing.
(86) Internationale Anmeldenummer: EP9404127
(87) Internationale Veröffentlichungsnummer: WO9516540

(56) Entgegenhaltungen:
- EP-A- 0 491 242
- FR-A- 2 636 554
- FR-A- 2 678 193
- US-A- 4 733 048

## Beschreibung

Die Erfindung betrifft eine Schweiß- oder Schneidvorrichtung, insbesondere zum Laserschweißen, Laserschneiden oder dgl. mit den Merkmalen im Oberbegriff des Hauptanspruchs.

Eine solche manipulatorgeführte Schweißvorrichtung ist aus der Praxis bekannt. Sie besitzt einen Schweißkopf in Form eines Laserkopfes, der von einem Niederhalter umgeben ist und innerhalb des Niederhalters gelagert und zentriert ist. Der Niederhalter wird auf das Werkstück gepreßt, wobei gegebenenfalls bei einer Verschweißung mehrerer Werkstücke von der anderen Seite ein Gegenhalter gegendrückt. Der Niederhalter und gegebenenfalls der Gegenhalter sind mittels einer Halterung an der Hand eines Manipulators befestigt.

Die FR-A 2 678 193 zeigt eine manipulatorgeführte Schweißvorrichtung mit einem Laserschweißkopf, der von einem rohrförmigen Niederhalter umgeben ist. Der Niederhalter kann mittels einer federnden Geradführung elastisch an das Werkstück angepreßt werden und dabei in einer senkrechten Richtung federnd ausweichen. Die Ausweichrichtung fällt zusammen mit der Strahlrichtung des austretenden Laserstrahls. Aus der Schrift ist es ferner noch bekannt, die Niederhalter um die Laserstrahlachse rotieren zu lassen. Ein Ausgleich von Winkelfehlern bei einem schiefen Ansetzen des Niederhalters am Werkstück oder bei Oberflächenfehlern des Werkstücks ist damit nicht möglich.

In der Praxis hat sich gezeigt, daß es Probleme mit der Schweißqualität gibt, wenn Bauteiltoleranzen und Spannungenauigkeiten auftreten.

Die Erfindung hat zur Aufgabe, eine Schweißvorrichtung aufzuzeigen, mit der eine bessere und konstantere Schweißqualität zu erreichen ist.

Die Erfindung löst diese Aufgabe mit den Merkmalen im Hauptanspruch.
Mit der Erfindung wurde erkannt, daß eine Ursache für die frühere verminderte Schweißqualität in einer unzureichenden Anpressung des Niederhalters an das oder die Werkstück(e) zu suchen ist. Mit der Erfindung wird daher eine Ausgleichsvorrichtung vorgeschlagen, mit der eventuelle Winkelfehler zwischen dem oder den Werkstück(en) und dem Niederhalter ermittelt und korrigiert werden. Damit ist unter Anpassung an die Werkstückoberfläche eine ebene und gleichmäßige Anpressung des Niederhalters und damit eine höhere Schweißqualität gewährleistet.

Falls die Schweißvorrichtung einen Gegenhalter aufweist, kann auch dieser mit der Ausgleichsvorrichtung verbunden sein oder eine eigene Ausgleichsvorrichtung aufweisen.

In der einen Ausführungsform der Ausgleichsvorrichtung bewegt sich nur der Niederhalter, wobei der Schweißkopf steht und in seiner Position weitgehend durch die Zustellung bestimmt ist. Die Ausgleichsvorrichtung kann aber auch so ausgestaltet sein, daß sich der Niederhalter zusammen mit dem Schweißkopf bewegt und an die Werkstückoberfläche anpaßt. Die Zuordnung zwischen Niederhalter und Schweißkopf und damit die Fokusjustierung bleiben dadurch erhalten. Durch die Anpassung kann sich der Schweißkopf dann möglichst weitgehend parallel zur Werkstückoberfläche bewegen. Das ist z.B. der Fall, wenn der Schweißkopf innerhalb des Niederhalters nach ein oder mehreren Richtungen mit einer geeigneten Stellvorrichtung verfahren wird. Örtliche Toleranzen in der Werkstückoberfläche lassen sich zumindest teilweise ausgleichen.

Die erfindungsgemäße Schweißvorrichtung ist vorzugsweise als Laserschweiß- oder Laserschneidvorrichtung ausgebildet. Sie kann aber auch als eine andere Schweiß- oder Schneidvorrichtung ausgebildet sein, die mit einem Niederhalter und gegebenenfalls einem Gegenhalter arbeitet. Besondere Vorteile bestehen allerdings hinsichtlich einer Laserschweißvorrichtung, bei der der Niederhalter und der Laserkopf in besonderer Weise zusammenwirken.

Mit der Erfindung werden verschiedene Möglichkeiten zur Ausgestaltung der Ausgleichsvorrichtung vorgeschlagen. In der bevorzugten Ausführungsform besitzt die Ausgleichsvorrichtung eine Schwenklagerung mit mindestens einer Schwenkachse. Dadurch kann der Niederhalter und/oder der Gegenhalter bei der Zustellung selbsttätig durch eine ausgleichende Drehbewegung an die Werkstückoberfläche angepaßt werden.

In den Unteransprüchen ist eine besonders vorteilhafte Ausgestaltung der Schwenklagerung und der Halterung der Schweißvorrichtung aufgezeigt.

In Variation hierzu kann die Ausgleichsvorrichtung auch mehrere Sensoren zur Ermittlung von Winkelfehlern aufweisen. Die Sensoren können unterschiedlich gestaltet sein, wobei sich Kraft- bzw. Drucksensoren oder Abstandssensoren anbieten. Die Korrektur der Winkelstellung kann über einen eigenständigen Antrieb der Schweißvorrichtung erfolgen, der z. B. in die Halterung integriert ist. Alternativ können die Sensorsignale auch der Manipulatorsteuerung zugeführt werden, so daß die Korrekturbewegung über die Hand des Manipulators erfolgt.

Die Erfindung ist in den Zeichnungen beispielsweise und schematisch dargestellt. Im einzelnen zeigen:
- Figur 1:: die manipulatorgeführte Schweißvorrichtung mit einer als Schwenklager ausgestalteten Ausgleichsvorrichtung in Seitenansicht,
- Figur 2:: eine Variante der Ausgleichsvorrichtung von Figur 1 mit einem anderen Schwenklager,
- Figur 3:: einen Schnitt durch die Schweißvorrichtung von Figur 1 entlang Schnittlinie III-III und
- Figur 4:: einen Schnitt durch die Schweißvorrichtung von Figur 2 entlang Schnittlinie IV-IV.

In den Zeichnungen ist eine Schweißvorrichtung (1) dargestellt, die vorzugsweise als Laserschweißvorrichtung ausgebildet ist. Sie wird von einem Manipulator (2) geführt, der vorzugsweise als mehrachsiger Industrieroboter ausgebildet ist und eine mehrachsig bewegliche Hand (3) besitzt. Der Schweißkopf (7) ist im gezeigten Ausführungsbeispiel als Laserkopf ausgebildet, der mittels einer mehrteiligen Halterung (9) an der Hand (3) befestigt ist. Der Laserkopf (7) ist von einem im wesentlichen gabelförmigen oder ringförmigen Niederhalter (6) umgeben und darin vorzugsweise zentriert angeordnet. An der Unterseite der Halterung (9) kann auch ein Gegenhalter (nicht dargestellt) angeordnet sein.

Zum Schweißen wird der Niederhalter (6) gegen das Werkstück (4) gedrückt. Bei dem Werkstück (4) handelt es sich beispielsweise um ein Blech. Sollen mehrere Werkstücke (4,5) bzw. Bleche miteinander verschweißt werden, kann von der Gegenseite ein fester Gegenanschlag oder ein Gegenhalter in Aktion treten. Die Bleche (4,5) werden zwischen Niederhalter (6) und Gegenhalter während des Schweißvorganges zusammengepreßt.

Die Zustellung der Schweißvorrichtung (1) erfolgt über den Manipulator (2), der vorzugsweise über eine Bahnsteuerung verfügt. Die Schweißvorrichtung (1) kann eine eigenständige Steuerung haben, die alternativ aber auch in die Manipulatorsteuerung integriert sein kann. Der Schweißprozeß läuft dadurch automatisch ab. Mit dem Laserkopf (7) werden an den Werkstücken (4,5) mehrere Schweißpunkte oder -nähte gesetzt, wobei die Schweißvorrichtung (1) von Punkt zu Punkt verfahren wird.

Bei der manipulatorgeführten Zustellung kann es zu Winkelfehlern zwischen dem Niederhalter (6) und der Oberfläche des Werkstücks (4) kommen. Dies ist z. B. der Fall, wenn das Werkstück (4) Verwerfungen aufweist oder auch eine von vornherein gekrümmte Form besitzt. Zu Winkelfehlern kann es auch zwischen dem Gegenhalter und dem Werkstück (4,5) kommen. Für den Niederhalter (6) sind Winkelfehler aufgrund seiner im wesentlichen ringförmigen Aufstandsfläche in der Regel von größerem Nachteil. Der Niederhalter (6) muß an der Berührungs- oder Aufstandsfläche am Werkstück (4) keine geschlossene Gabelform oder Ringform aufweisen, sondern kann aus mehreren entsprechend angeordneten Füßen oder Stegen mit Zwischenräumen bestehen.

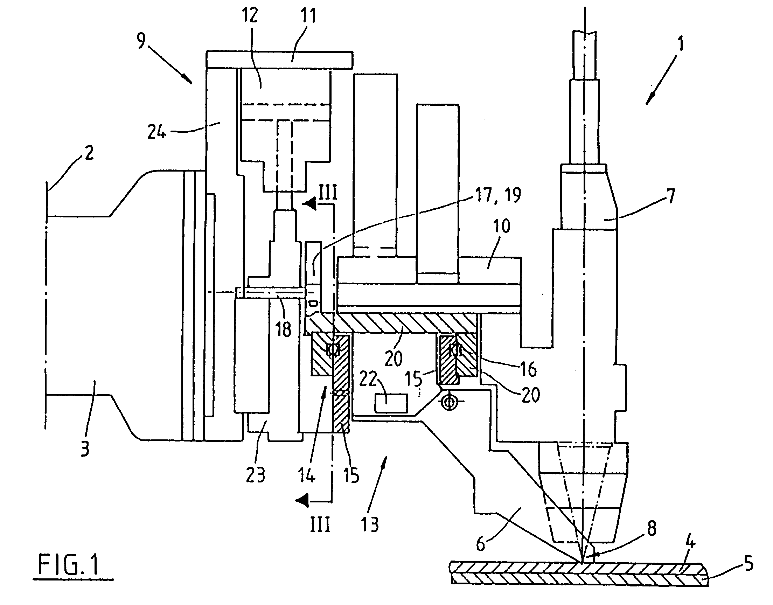

Zur Ermittlung und Korrektur von Winkelfehlern ist eine Ausgleichsvorrichtung (13) vorgesehen. In den Ausführungsbeispielen der Figuren 1 und 2 bzw. 3 und 4 sind hierfür verschiedene Ausführungsformen angegeben.

Bei Einsatz einer anderen Schweiß- oder Schneidtechnik, z.B. WIG-Schweißen, ist der Schweißkopf entsprechend anders ausgebildet. Die nachstehenden Erläuterungen zur Schweißvorrichtung (1) und zur Ausgleichsvorrichtung (13) gelten dann analog.

In den gezeigten Ausführungsbeispielen besteht die Ausgleichsvorrichtung (13) aus einer Schwenklagerung (14). Diese erlaubt es dem Niederhalter (6), sich beim Andrücken selbsttätig in die richtige Anpreßstellung gegenüber dem Werkstück (4) zu drehen. In der gezeigten Ausführungsform ist die Schwenklagerung (14) einachsig, sie kann aber auch als mehrachsige Lagerung, insbesondere als kardanische Schwenklagerung ausgebildet sein. Der Niederhalter (6) dreht sich dabei vorzugsweise um den Fokus (8) des Laserkopfes (7).

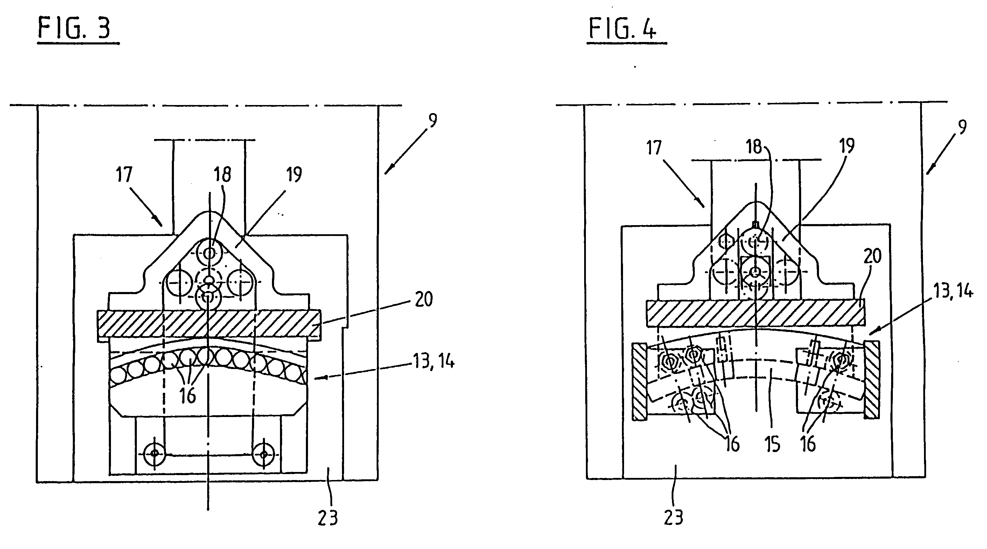

Die Schwenklagerung (14) ist in Figur 1 und 3 als zweifaches gebogenes Kugellager ausgebildet. Sie besitzt dazu jeweils eine gebogene Anordnung einer Reihe von Rollkörpern (16), vorzugsweise Kugeln, die zwischen einer der Halterung (9) zugeordneten, relativ ortsfesten Schiene (15) und einem übergreifenden Lagerbügel (20) des Niederhalters (6) angeordnet sind.

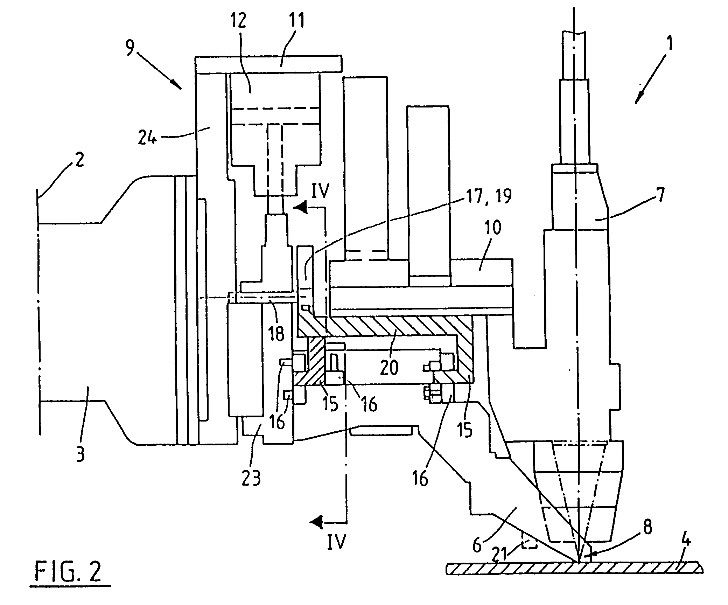

In Fig. 2 und 4 weist das Schwenklager (14) zwei gebogene Schienen (15) auf, die eine parallel zueinander verlaufende Ober- und Unterseite besitzen. Die Schienen (15) sind diesmal mit dem Niederhalter (6) über einen geeigneten Lagerbügel (20) verbunden. An der Schienenober- und unterseite greifen jeweils an der Halterung (9) gelagerte Rollkörper (16) an, die vorzugsweise als Walzen ausgebildet sind. Die gekrümmten Schienen (15) sind an den ebenfalls im Bogen angeordneten Rollkörpern (16) schwenkbar gelagert. Zusätzlich können ein oder mehrere Walzen als Seitenführung vorgesehen sein.

Die Bogenanordnung der Schienen (15) oder Rollkörper (16) ist vorzugsweise um den Fokus (8) des Laserkopfes (7) als Mittelpunkt gekrümmt. Der Fokus (8) befindet sich in Schweißposition üblicherweise auf der Oberfläche des Werkstücks (4) und im Mittelpunkt der ring- oder gabelförmigen Aufstandsfläche des umgebenden Niederhalters (6). Ein Schwenk des Niederhalters (6) um den Fokus (8) ist günstig für die gleichmäßige und im wesentlichen zentrische Anpressung um den Schweißpunkt. Es kann alternativ aber auch ein anderer Krümmungs- oder Schwenkmittelpunkt herangezogen werden, der vorzugsweise ebenfalls auf der Werkstückoberfläche liegt.

Die Rollkörper (16) greifen in beiden Ausführungsformen derart an den Schienen (15) oder am Lagerbügel (20) an, daß nur eine Schwenkbeweglichkeit gegeben ist, wobei der Niederhalter (6) ansonsten formschlüssig geführt ist und mit dem Laserkopf (7) gehoben und gesenkt sowie seitlich verfahren wird. In analoger Weise kann auch eine mehrachsige Schwenklagerung (14) ausgebildet sein.

Im unteren Rand des Niederhalters (6) können ein oder mehrere federbelastete Kugeln (nicht dargestellt) integriert sein. Die Kugeln verringern die Reibung zwischen dem Niederhalter (6) und dem Werkstück (4) und erleichtern den Winkelausgleich. Zugleich wird eine Beschädigung des Werkstücks (4) vermieden. Der Federweg der Kugeln ist so groß, daß die Kugeln im Niederhalter (6) beim Anpressen verschwinden können.

Der Laserkopf (7) ist vorzugsweise unabhängig vom Niederhalter (6) und eigenständig mit der Halterung (9) verbunden. Dies kann eine starre Verbindung sein. Alternativ kann auch eine Stellvorrichtung (10) zur ein- oder mehrachsigen Veränderung der Laserkopfposition innerhalb des Niederhalters (6) vorhanden sein. Die Stellvorrichtung (10) besteht im gezeigten Ausführungsbeispiel aus einem Kreuzschlitten mit horizontaler und vertikaler Achse nebst geeigneten Antrieben. Über die Stellvorrichtung (10) kann der Laserkopf (7) gegenüber der Roboterhand (3) und dem Niederhalter (6) verstellt werden. Die Stellvorrichtung (10) kann alternativ auch nur eine Achse aufweisen. Sie kann je nach Ausgestaltung der Schweißvorrichtung (1) auch entfallen.

Die Halterung (9) ist im gezeigten Ausführungsbeispiel mehrteilig und besitzt eine Andrückvorrichtung (11) und die vorerwähnte Stellvorrichtung (10). Die Andrückvorrichtung (11) ist nahe der Hand (3) angeordnet und besitzt einen zumindest einachsig beweglichen Schlitten (23), der an einem mit der Hand (3) verbundenen Gestell (24) gelagert ist. Der Schlitten (23) ist gegen die Kraft einer rückstellenden Feder (12) verfahrbar. Die Feder (12) kann als mechanische Schraubendruckfeder, als Gasfeder oder in sonstiger geeigneter Weise ausgebildet sein.

Am Schlitten (23) ist die Stellvorrichtung (10) angeordnet, an der wiederum der Laserkopf (7) hängt. In Fig. 1 und 3 sind am Schlitten (23) auch die beiden Schienen (15) befestigt, an denen über die Rollkörper (16) und den umgreifenden Lagerbügel (20) der Niederhalter (6) aufgehängt ist. In Fig. 2 und 4 sind am Schlitten (23) die Rollkörper (16) gelagert, an denen die mit dem Niederhalter (6) verbundenen Schienen (15) geführt sind.

Die Bewegungsachse des Schlittens und der Feder (12) ist vorzugsweise parallel zur Längsachse des Laserkopfes (7) und des Niederhalters (6) und damit auch parallel zur normalen Zustellrichtung ausgerichtet. Bei der Zustellung der Schweißvorrichtung (1) wird der Niederhalter (6) gegen das Werkstück (4) geführt, wobei nach erfolgter Anlage die Zustellbewegung des Manipulators (2) noch ein Stück weitergeführt wird. Hierbei wird in der Andrückvorrichtung (11) die in Richtung der Zustellbewegung wirkende Feder (12) gespannt und der Niederhalter (6) mit einer dem Zustell- oder Spannweg entsprechenden Federkraft an das Werkstück (4) gepreßt.

Die Ausgleichsvorrichtung (13) besitzt eine Zentriereinrichtung (17) für den Niederhalter (6). Hierzu ist in beiden gezeigten Ausführungsformen am horizontalen Steg des Lagerbügels (20) ein in der Draufsicht im wesentlichen dreieckiger Zentrierbügel (19) angeordnet, in dessen obere Spitze Arretierstift (18) greift. Flankierend können seitlich noch weitere Stifte angreifen. Der Zentrierbügel (19) steht im wesentlichen senkrecht und erstreckt sich parallel zur Bewegungsachse des Schlittens (23).

Der Arretierstift (18) ist mit dem Gestell (24) der Halterung (9) derart ortsfest verbunden, daß er sich bei der Einfahrbewegung der Andrückvorrichtung (11) nicht mitbewegt. Der mit der Andrückvorrichtung (11) gekoppelte Zentrierbügel (19) gerät dadurch beim Anpressen des Niederhalters (6) an der Bügelspitze außer Kontakt mit dem Arretierstift (18) und kann sich mitsamt dem Niederhalter (6) drehen. Die Drehbeweglichkeit ist allerdings durch seitlichen Anschlag der Zentrierbügelarme am Arretierstift (18) begrenzt.

Beim Lösen des Niederhalters (6) vom Werkstück (4) geraten der Arretierstift (18) und die Bügelspitze wieder in Kontakt, wodurch der Zentrierbügels (19) wieder gefangen und zentriert wird.

Wie Fig. 1 verdeutlicht, kann der Niederhalter (6) aus zwei klappbaren Teilen bestehen, die beim Anpressen des Niederhalters (6) zumindest ein kleines Stück relativ zueinander bewegt werden. Dazwischen kann ein Kraft, Zug oder Druck aufnehmender Sensor (22) angeordnet sein, der die Anpreßkraft des Niederhalters (6) am Werkstück (4) mißt und an die Steuerung des Manipulators (2) meldet.

Durch das Feedback kann die Preßkraft geregelt werden.

In einem nicht gezeigten Ausführungsbeispiel ist ein Gegenhalter an der Unterseite der Halterung befestigt. Er kann ebenfalls eine Ausgleichsvorrichtung in Form einer Schwenklagerung oder in anderer geeigneter Gestalt aufweisen. Der Gegenhalter besitzt beispielsweise eine zylinderbetätigte schwenkbare Zange, die von unten zentrisch zum Niederhalter gegen das untenliegende Werkstück (5) gepreßt werden kann.

In einer Variante der Ausgleichsvorrichtung (13) sind mehrere Sensoren (21) am unteren Rand des Niederhalters (6) angeordnet. Sie können in die Wandung des Niederhalters (6) integriert oder außenseitig befestigt sein. Figur 2 zeigt gestrichelt eine mögliche Anordnung am Niederhalter (6). Die Sensoren (21,22) können alternativ oder kombinativ verwendet werden.

Bei den Sensoren (21) handelt es sich z.B. um Abstandsmeß-Sensoren. Sie stellen fest, ob ein Kontakt zwischen dem Niederhalter (6) und dem Werkstück (4) besteht und ob bei Schrägstellungen noch ein Zwischenraum vorhanden ist. Es kann sich alternativ aber auch um Kraft- oder Drucksensoren handeln, die vorzugsweise in die Aufstandsfläche des Niederhalters (6) integriert sind. Sie messen den beim Anpressen des Niederhalters (6) örtlich auftretenden Druck und stellen in Verbindung mit einer geeigneten Steuerung fest, ob Druckunterschiede und damit Winkelfehler bestehen oder nicht. Die Sensoren (21) sind vorzugsweise gleichmäßig rund um den Niederhalter (6) verteilt. Vorzugsweise kommen vier oder mehr Sensoren (21) zu Einsatz.

Die Auswertung der Sensorsignale erfolgt in einer geeigneten Steuerung. Diese kann in die Schweißvorrichtung (1) integriert sein. In diesem Fall empfiehlt es sich auch, die Korrektur der Winkelfehler durch geeignete Stellantriebe innerhalb der Schweißvorrichtung (1) vorzunehmen (nicht dargestellt). Die Stellantriebe drehen den Niederhalter (6) und gegebenenfalls auch den Gegenhalter so lange, bis die Sensoren (21) eine gleichmäßige Anpressung an die Werkstücke (4,5) melden.

Alternativ können die Sensorsignale auch an die Steuerung des Manipulators (2) gemeldet werden. Die Korrektur der Winkelfehler erfolgt dann über eine entsprechende Drehung der Hand (3).

Bei Verwendung von Kraft- oder Drucksensoren (21,22) ergibt sich über die Winkelfehlerkorrektur hinaus noch die Möglichkeit zur Steuerung und Regelung der Anpreßkraft. Die Sensorsignale werden dazu nicht nur relativ zueinander, sondern auch absolut zur Messung der Anpreßkraft oder des Anpreßdrucks ausgewertet. Die Manipulatorsteuerung kann die Schweißvorrichtung (1) dann zur Erzielung der gewünschten Anpreßkraft nachstellen.

In Abwandlung der beschriebenen Ausführungsbeispiele kann der Laserkopf (7) mit dem Niederhalter (6) gekoppelt sein, so daß er sich bei der Ausgleichsbewegung mitbewegt. Der Fokus (8) bleibt dadurch auf der Werkstückoberfläche. Die Verbindung zum Niederhalter (6) kann starr sein. Es ist alternativ auch möglich, die ein- oder mehrachsige Stellvorrichtung (10) mit dem Niederhalter (6) zu verbinden, indem sie z.B. auf dem Lagerbügel (20) aufsetzt. Der Laserkopf (7) kann dann innerhalb des Niederhalters (6) verfahren werden, wobei er sich durch den Winkelausgleich weitgehend parallel zur Werkstückoberfläche bewegt.

Zu den gezeigten Ausführungsbeispielen sind weitere Varianten möglich. Zum einen kann die Schwenklagerung (14) aus einem Kardangelenk bestehen, das innerhalb oder außerhalb des Niederhalters (6) angeordnet ist. Es kann sich auch um ein Lenkergetriebe mit ein oder mehreren Lenkern und einer entsprechenden Achsenzahl handeln. Gegenüber den Ausführungsbeispielen der Figuren 1 und 2 kann die kinematische Zuordnung der Schienen (15) und Rollkörper (16) zum Niederhalter (6) oder zum Schlitten (23) umgedreht sein.

Ferner können anstelle der beschriebenen Sensoren andere geeignete Sensortypen eingesetzt werden.

### BEZUGSZEICHENLISTE

- 1: Schweißvorrichtung
- 2: Manipulator, Industrieroboter
- 3: Hand
- 4: Werkstück, Blech
- 5: Werkstück, Blech
- 6: Niederhalter
- 7: Schweißkopf, Laserkopf
- 8: Fokus
- 9: Halterung
- 10: Stellvorrichtung, Kreuzschlitten
- 11: Andrückvorrichtung
- 12: Feder, Zylinder
- 13: Ausgleichsvorrichtung
- 14: Schwenklagerung
- 15: Schiene
- 16: Rollkörper
- 17: Zentriereinrichtung
- 18: Arretierstift
- 19: Zentrierbügel
- 20: Lagerbügel
- 21: Sensor, Abstandsmessung
- 22: Sensor, Kraft/Druck-Messung
- 23: Schlitten
- 24: Gestell

## Patentansprüche

1. Vorrichtung zum Schweißen und/oder Schneiden, insbesondere zum Laserschweißen oder dgl., mit einem Schweißkopf (7) und einem umgebenden Niederhalter (6) zum Anpressen eines Werkstücks (4,5), der mittels einer Halterung (9) an der Hand (3) eines Manipulators (2) befestigbar ist, dadurch **gekennzeichnet**, daß die Schweißvorrichtung (1) eine Ausgleichsvorrichtung (13) zur Ermittlung und Korrektur von Winkelfehlern zwischen Werkstück (4,5) und Niederhalter (6) aufweist.

2. Vorrichtung nach Anspruch 1, dadurch **gekennzeichnet**, daß die Ausgleichsvorrichtung (13) eine Schwenklagerung (14) mit mindestens einer Achse aufweist.

3. Vorrichtung nach Anspruch 2, dadurch **gekennzeichnet**, daß die Schwenklagerung (14) ein oder mehrere Schienen (15) und mindestens einen Lagerbügel (20) mit mehreren dazwischen im Bogen angeordneten Rollkörpern (16) aufweist.

4. Vorrichtung nach Anspruch 3, dadurch **gekennzeichnet**, daß die Schiene(n) (15) an der Halterung (9) und der Lagerbügel (20) am Niederhalter (6) angeordnet sind.

5. Vorrichtung nach Anspruch 2, dadurch **gekennzeichnet**, daß die Schwenklagerung (14) mindestens eine gebogenen Schiene (15) aufweist, die an mehreren Rollkörpern (16) geführt ist.

6. Vorrichtung nach Anspruch 3, dadurch **gekennzeichnet**, daß die Schiene (15) mit dem Niederhalter (6) und die Rollkörper (16) mit der Halterung (9) verbunden sind.

7. Vorrichtung nach Anspruch 3 oder 5, dadurch **gekennzeichnet**, daß die Bogenanordnung der Rollkörper (16) oder der Schiene (15) um den Fokus (8) gekrümmt ist.

8. Vorrichtung nach Anspruch 1 oder einem der folgenden, dadurch **gekennzeichnet**, daß die Halterung (9) eine federnde Andrückvorrichtung (11) aufweist.

9. Vorrichtung nach Anspruch 8, dadurch **gekennzeichnet**, daß zwischen dem Schweißkopf (7) und der Andrückvorrichtung (11) eine zumindest einachsige Stellvorrichtung (10) angeordnet ist.

10. Vorrichtung nach Anspruch 1 oder einem der folgenden, dadurch **gekennzeichnet**, daß die Ausgleichsvorrichtung (13) eine Zentriereinrichtung (17) aufweist.

11. Vorrichtung nach Anspruch 10, dadurch **gekennzeichnet**, daß die Zentriereinrichtung (17) einen mit dem Niederhalter (6) verbundenen Zentrierbügel (19) und zumindest einen an der Halterung (9) relativ ortsfest angeordneten Arretierstift (18) aufweist.

12. Vorrichtung nach Anspruch 1 oder einem der folgenden, dadurch **gekennzeichnet**, daß der Niederhalter einen Sensor (22) zum Messen der Anpreßkraft aufweist.

13. Vorrichtung nach Anspruch 1, dadurch **gekennzeichnet**, daß die Ausgleichsvorrichtung (13) mehrere Sensoren (21) zur Ermittlung von Winkelfehlern aufweist, wobei die Sensoren (21) mit einem eigenen Korrekturantrieb der Schweißvorrichtung (1) oder der Steuerung des Manipulators (2) verbunden sind.

14. Vorrichtung nach Anspruch 1 oder einem der folgenden, dadurch **gekennzeichnet**, daß die Schwenklagerung (14) als Lenkergetriebe ausgebildet ist.

## Claims

1. A device for welding and/or cutting, in particular for laser welding or the like, having a welding head (7) and a surrounding hold-down means (6) for pressing against a workpiece (4, 5), the hold-down means (6) being securable to the hand (3) of a manipulator (2) by means of a mounting (9), characterized in that the welding device (1) has a compensation device (13) for determining and correcting angular errors between the workpiece (4, 5) and the hold-down means (6).

2. A device according to Claim 1, characterized in that the compensation device (13) has a pivot bearing (14) having at least one axis.

3. A device according to Claim 2, characterized in that the pivot bearing (14) has one or more rails (15) and at least one bearing bracket (20), with a plurality of rolling bodies (16) arranged in between in the arc.

4. A device according to Claim 3, characterized in that the rails(s) (15) are arranged on the mounting (9) and the bearing bracket (20) is arranged on the hold-down means (6).

5. A device according to Claim 2, characterized in that the pivot bearing (14) has at least one arcuate rail (15) which is guided on a plurality of rolling bodies (16).

6. A device according to Claim 3, characterized in that the rail (15) is connected to the hold-down means (6) and the rolling bodies (16) are connected to the mounting (9).

7. A device according to Claim 3 or 5, characterized in that the arcuate arrangement of the rolling bodies (16) or of the rail (15) is curved about the focal point (8).

8. A device according to claim 1 or to one of the subsequent claims, characterized in that the mounting (9) has a resilient contact-pressure device (11).

9. A device according to Claim 8, characterized in that an at least uniaxial servo device (10) is arranged between the welding head (7) and the contact-pressure device (11).

10. A device according to Claim 1 or to one of the subsequent claims, characterized in that the compensation device (13) has a centring device (17).

11. A device according to Claim 10, characterized in that the centring device (17) has a centring bracket (19) connected to the hold-down means (6) and at least one locking pin (18) which is arranged to be stationary relative to the mounting (9).

12. A device according to Claim 1 or to one of the subsequent claims, characterized in that the hold-down means has a sensor (22) for measuring the pressing-on force.

13. A device according to Claim 1, characterized in that the compensation device (13) has a plurality of sensors (21) for determining angular errors, the sensors (21) being connected to a separate correction drive of the welding device (1) or the control of the manipulator (2).

14. A device according to Claim 1 or to one of the subsequent claims, characterized in that the pivot bearing (14) is constructed as a guide mechanism.

## Revendications

1. Dispositif de soudage et/ou de coupage, notamment pour le soudage laser ou analogue, comportant une tête de soudage (7) et un serre-pièce (6), qui l'entoure, qui est destiné à appuyer sur une pièce (4, 5) et qui peut être fixé, au moyen d'un système de fixation (9), à la main (3) d'un manipulateur (2), caractérisé par le fait que le dispositif de soudage (1) comporte un dispositif de compensation (13) servant à détecter et à corriger des erreurs angulaires entre pièce (4, 5) et serre-pièce (6).

2. Dispositif selon la revendication 1, caractérisé par le fait que le dispositif de compensation (13) comporte une articulation (14) ayant au moins un axe.

3. Dispositif selon la revendication 2, caractérisé par le fait que l'articulation (14) comporte un ou plusieurs rail(s) (15) et au moins un étrier de support (20), avec plusieurs corps de roulement (16) disposés en forme d'arc entre ceux-ci.

4. Dispositif selon la revendication 3, caractérisé par le fait que le ou les rail(s) (15) est ou sont disposé(s) sur le système de fixation (9), l'étrier de support (20) étant placé sur le serre-pièce (6).

5. Dispositif selon la revendication 2, caractérisé par le fait que l'articulation (14) comporte au moins un rail courbe (15), qui est guidé sur plusieurs corps de roulement (16).

6. Dispositif selon la revendication 3, caractérisé par le fait que le rail (15) est relié au serre-pièce (6) et que les corps de roulement (16) sont reliés au système de fixation (9).

7. Dispositif selon la revendication 3 ou 5, caractérisé par le fait que la disposition en arc des corps de roulement (16) ou du rail (15) est incurvée autour du point focal (8).

8. Dispositif selon la revendication 1 ou l'une des suivantes, caractérisé par le fait que le système de fixation (9) comporte un dispositif d'application de pression (11) à ressort.

9. Dispositif selon la revendication 8, caractérisé par le fait qu'un dispositif d'actionnement (10), au moins à un axe, est placé entre la tête de soudage (7) et le dispositif d'application de pression (11).

10. Dispositif selon la revendication 1 ou l'une des suivantes, caractérisé par le fait que le dispositif de compensation (13) comporte un dispositif de centrage (17).

11. Dispositif selon la revendication 10, caractérisé par le fait que le dispositif de centrage (17) comporte un étrier de centrage (19), relié au serre-pièce (6), et au moins une broche d'arrêt (18), placée de manière relativement fixe sur le système de fixation (9).

12. Dispositif selon la revendication 1 ou l'une des suivantes, caractérisé par le fait que le serre-pièce comporte un capteur (22) servant à mesurer l'effort de pression.

13. Dispositif selon la revendication 1, caractérisé par le fait que le dispositif de compensation (13) comporte plusieurs capteurs (21) pour la détection d'erreurs angulaires, les capteurs (21) étant reliés à un actionneur de correction faisant partie du dispositif de soudage (1), ou bien à la commande du manipulateur (2).

14. Dispositif selon la revendication 1 ou l'une des suivantes, caractérisé par le fait que l'articulation (14) est réalisé sous la forme d'un mécanisme à biellettes.
